# NEW EUROPEAN PATENT SPECIFICATION

(11) **EP 2 651 747 B2**
(45) Date of publication and mention of the opposition decision: **29.05.2024**
(45) Mention of the grant of the patent: 17.07.2019
(21) Application number: 10860659.1
(22) Date of filing: 15.12.2010
(51) Int. Cl.: B62D 7/18, F16D 121/02, F16D 55/00, F16D 55/28

(54) **STEERING KNUCKLE AND VEHICLE COMPRISING A STEERING KNUCKLE**
ACHSSCHENKEL UND FAHRZEUG MIT EINEM ACHSSCHENKEL
ROTULE DE DIRECTION ET VÉHICULE COMPRENANT UNE ROTULE DE DIRECTION

(43) Date of publication of application: 23.10.2013
(73) Proprietor: Volvo Lastvagnar AB, 405 08 Göteborg (SE)
(72) Inventor: ANDERSSON, Jörgen, S-438 33 Landvetter (SE); DAGH, Ingemar, S-413 18 Göteborg (SE)
(74) Representative: Valea AB
(86) International application number: PCT/SE2010/000301
(87) International publication number: WO 2012/082020

(56) References cited:
- EP-B1- 0 636 216
- WO-A1-00/66908
- WO-A1-01/45996
- WO-A1-01/45996
- WO-A1-92/11474
- DE-A1- 19 611 427
- DE-A1- 19 743 538
- DE-A1-102006 004 487
- DE-B4- 19 857 074
- DE-T2- 60 315 978
- US-A- 5 860 495

## Description

### TECHNICAL FIELD

The invention relates to a steering knuckle and a vehicle comprising a steering knuckle.

### BACKGROUND OF THE INVENTION

WO-A-00/66908 discloses brake and knuckle assembly for an improved turning circle of a vehicle for a front wheel suspension. As described therein, the conventional front wheel suspension has a turning circle which is defined as the smallest turning radius that the front wheels may turn with the steering wheel angling the vehicle wheels to the maximum extent.

The radius is between a rotation centre located on line extended through the rear wheel axis to a wheel pivot axis at a stub axle about which the wheel pivots. The maximum angle through which the front wheels can turn is usually called the locking angle. There is a front locking angle for the near front wheel and a rear locking angle for the farther front wheel. One limitation on the extent of front wheel pivoting is the abutment of a calliper of a front wheel disc brake with another portion of the suspension such as a top or bottom support member for the stub axle. The top and bottom supports are often wishbone suspension members or a McPherson strut suspension member. The top and bottom support members support the stub axle and are connected by ball connections to the stub axle for turning it about an axis through these ball joint connections. A steering suspension member is connected at one end to a rack and pinion steering device, or the like; and it is pivotally connected at its other end to the stub axle. The stub axle also carries a hub for mounting the wheel for rotation.

In addition to being heavy and large, the conventional calliper extends a considerable distance radially outwardly a considerable distance from the wheel vertical turning axis. WO-A-00/66908 solves this problem by providing a brake assembly for a sliding-calliper-disc brake that does not project radially outwardly so far from the vertical turning axis to reduce fouling of the brake mechanism with a suspension member. The brake and knuckle assembly has a low profile and is compact to improve the turning circle of the vehicle by mounting the force applicator of the disc brake at the top of the stub axle with a smaller radius projection form the steering axis than the conventional calliper mounted at the front or rear of the fixed brake.

A sliding calliper moves with respect to the brake disc, along a line parallel to the axis of rotation of the disc, wherein a piston on one side of the disc pushes the inner brake pad until it makes contact with the braking surface, then pulls the calliper body with the outer brake pad so that pressure is applied to both sides of the disc. According to a further prior art document, DE 196 11 427 discloses the preamble of claim 1 and relates to a steering axle assembly of a motor vehicle. The steering assembly comprises a steering knuckle and a brake housing which are integrally formed, and wherein a disc brake assembly is disposed in the housing.

However, there are disc brakes which do not use a sliding calliper but a fixed calliper. A fixed calliper does not move relative to the brake disc. It uses one or more pairs of opposing pistons to clamp from each side of the disc.

### SUMMARY OF THE INVENTION

It is an object of the invention to provide a steering knuckle for a wheel which provides an improved turning radius of a wheel employing a disc brake with a sliding calliper as well as for a wheel employing a fixed calliper.

Another object is to provide a vehicle, particularly a commercial vehicle such as a truck, with an improved turning radius.

The objects are achieved by the features of the independent claims. The other claims, the drawing and the description disclose advantageous embodiments of the invention.

A first aspect of the present invention relates to a steering knuckle for a non-driven or individually driven wheel of a heavy commercial vehicle in accordance with appended claim 1.

The main portion of the knuckle body can be understood as the seat for the biggest bearing. The two ears being provided for holding the king pin can be completely integral with the knuckle body, or one or both ears can be attached to the knuckle body, e.g. screwed to the knuckle body.

An individually driven wheel may be driven e.g. by an electrical wheel hub motor or by a hydraulic wheel hub motor.

Preferably, said outer diameter is the diameter of the stub axle at the interface to the vertically oriented main portion of the knuckle body, particularly at the vertical portion of the stub axle adjacent to a transition zone of the stub axle to the main portion. Such a transition zone is usually generated by a small smooth transition of the material of the stub axle to the main portion of the knuckle body. Expediently, the outer diameter of the stub axle can be about 68%, for example about 73% or more of the clearance between the ears located at the support section.

Favourably, the mechanical strength of knuckle body becomes much stronger and can tolerate more load than conventional solutions. The steering knuckle can bear a higher load which is not in a perfect position with respect to the stub axle. This means that by increasing the outer diameter, the interface between the stub axle and the main portion of the knuckle body can be arranged nearer to the centre of the wheel. The invention is particularly useful for heavy vehicles, particularly with more than 15 tons. For such heavy vehicles, the turning radius is critical especially in a narrow environment. The shorter the distance between the wheel centre and the knuckle body, the smaller is the turning radius of the vehicle. Advantageously, the turning radius can be reduced by reducing the distance between the knuckle body and the centre of the wheel. The centre of the wheel can be understood as the midplane between the inboard and outboard horn rim. The centre of the wheel is also known as load line of the wheel.

The outmost position of the wheel end to the wheel pivot axis at the stub axle can advantageously be less than about 340 mm, particularly less than about 330 mm from the king pin centre. The king pin centre is defined as the intersection of the centre axis of the king pin and the centre axis of the stub axle. In case there is a longitudinal offset between the two axes, the king pin centre is the intersection between the centre axis of the king pin and a horizontal plane through the centre axis of the stub axle.

Advantageously, by increasing the outer diameter of the stub axle the stiffness of the knuckle body, particularly of the stub axle, increases even faster than the strength of the knuckle body, particularly of the stub axle. Typically, the stiffness grows with the 4^{th} power and the strength grows with the 3^{rd} power of the outer diameter.

In contradistinction to the normal design principle of choosing a bearing size to carry the load which yields a required axle diameter, according to the invention the axle diameter is increased to strengthen the knuckle body resulting in an over-strong stub axle. Resulting from the improved bearing capacity for bearing load, the knuckle body allows for integrating parts of the brake into the knuckle body. Integration of brake parts in the knuckle body reduces the radial extension of the brake and stub axle from the wheel vertical turning axis thus reducing the turning radius of the wheel and vehicle. The number of separate components which have to be attached can be reduced thus saving time when mounting the brake to the knuckle body. Fixing means such as screws or bolts require some construction space because one must have access to these fixing means. By integrating certain parts into the knuckle body such construction space is not required as less fixing material such as bolts or screws are necessary and no space is required for providing access to such fixing material. A weight reduction can also be achieved as the improved strength of the knuckle body allows for making one or more parts, e.g. the stub axle, hollow. For instance, it is possible to integrate a hydraulic supply for a hydraulic wheel hub motor in the hollow axle.

The steering knuckle is designed for a disc brake. A disc brake is advantageous for modern commercial vehicles such a truck of at least 4 tons, particularly for at least 6 to 8 tons. The increased stiffness of the knuckle body due to the increased outer diameter of the stub axle can improve the performance of the disc brake. According to another favourable embodiment, the knuckle body may be manufactured by casting. A high quality and form-true steering knuckle can be provided.

Advantageously, the stub axle may have a diameter of at least 55 mm. This corresponds to an expedient size of the clearance between the two ears for the king pin at the support section of the steering knuckle.

In an expedient further embodiment, the stub axle may comprise at least one boring extending along the main extension of the stub axle. Advantageously, the boring reduces the weight of the whole steering knuckle. The boring can be a through-boring extending through the stub axle or a blind hole.

Furthermore, at least a portion of a disc brake is integrated into the knuckle body. According to the invention, the portion of the disc brake comprises an inner part of a brake carrier. A compact and easy-to-be-mounted disc brake can be provided.

According to a further advantageous embodiment, a portion of a calliper may be integrated in the knuckle body, preferably wherein an inner and/or outer brake-pad retainer is integrated in the knuckle body. Particularly, the integrated portion of the calliper may be a bridge of the calliper, wherein preferably the bridge provides borings for screwing a piston housing to the bridge. A compact and easy-to-be-mounted disc brake can be provided.

According to a further advantageous embodiment the brake carrier may comprise one or more borings provided for one or more guiding sleeves for a sliding calliper or a sliding disc. A disc brake with a sliding calliper and fixed brake disc or with a fixed calliper and a sliding disc can be provided.

According to another aspect of the invention a vehicle is proposed comprising a steering knuckle according to the first aspect of the present invention.

The present invention together with the above-mentioned and other objects and advantages may best be understood from the following detailed description of the embodiment(s), but not restricted to the embodiments, wherein is shown schematically:
- Fig. 1: a longitudinal cut through a wheel having an exemplary steering knuckle according to the invention;
- Fig. 2: a perspective cut view of the exemplary steering knuckle of Fig. 1;
- Fig. 3a-3c: an example embodiment, not forming part of the invention, of a steering knuckle seen in a perspective view from the support section with ears for a king pin (Fig. 3a), a front view from the stub axle side (Fig. 3b) and an exploded view of a wheel with knuckle body and a first variant of a partly integrated disc brake (Fig. 3c);
- Fig. 4a, 4b: an example embodiment of a steering knuckle with a second variant of a partly integrated disc brake in an exploded view (Fig. 4a) and the knuckle body and Fig. disc brake assembled (Fig. 4b);
- 5a-5d: various steps of assembling a wheel with the knuckle body and disc brake of Fig. 4a and 4b comprising a sliding calliper; and
- Fig. 6a, 6b: a steering knuckle assembled with a fixed calliper partially integrated into the knuckle body as a perspective view on a stub axle side (Fig. 6a) and a perspective view on a support section side of the steering knuckle (Fig. 6b).

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention. In the Figures, mainly the differences between the various embodiments are described in order to avoid unnecessary repetitions.

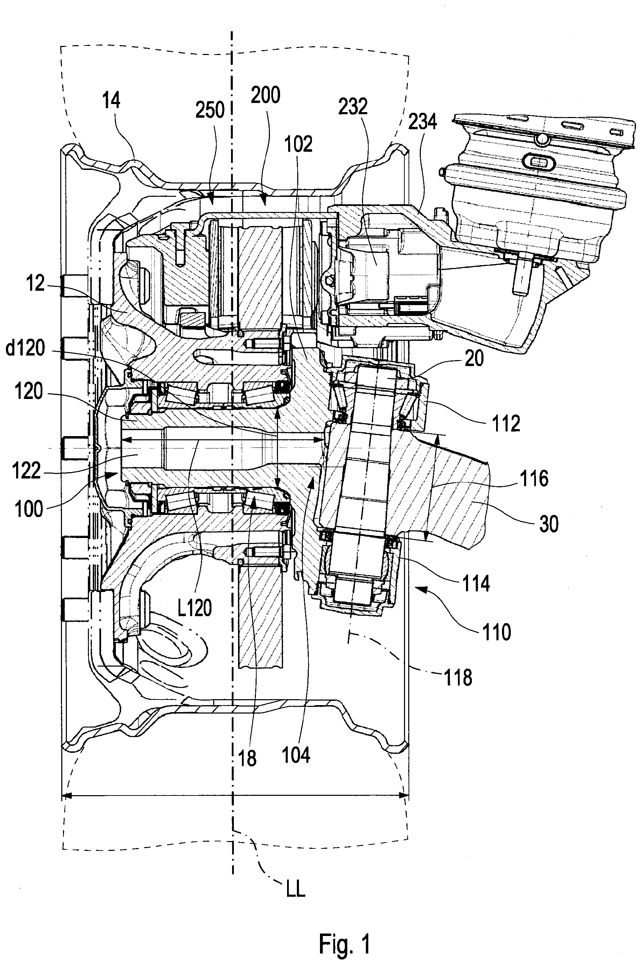

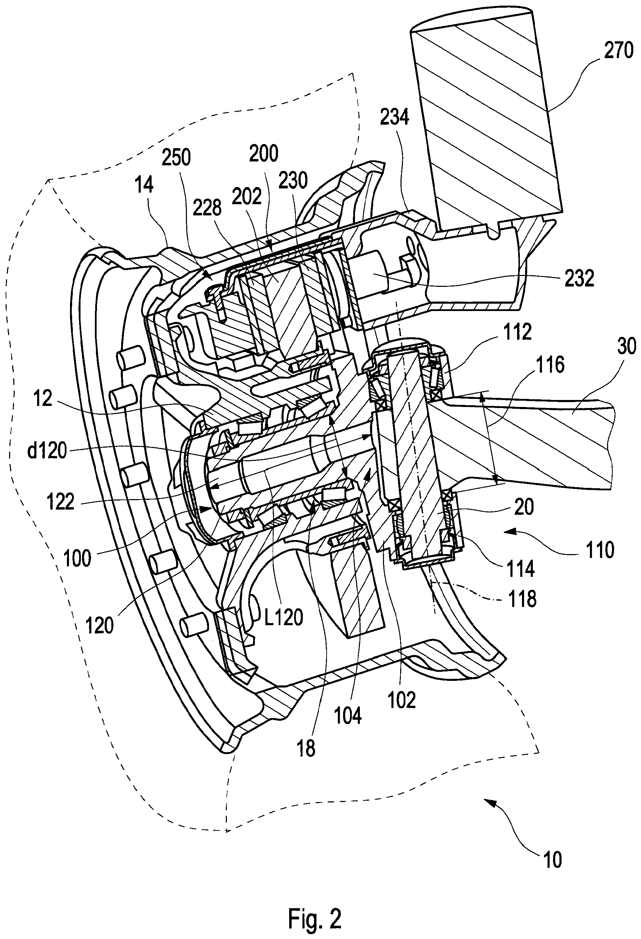

Fig. 1 depicts a longitudinal cut through a wheel 10 of a vehicle (not shown) having an exemplary steering knuckle 100 according to the invention and Fig. 2 shows a perspective cut view of the exemplary steering knuckle 100 of Fig. 1, showing more details of the disc brake 200. The disc brake 200 may by way of example, have a fixed disc 202 and a sliding calliper 250. From the outside the steering knuckle 100 is covered by a wheel hub 12 with a wheel rim 14. A tyre mounted to the wheel rim 14 is indicated by broken lines. The rim centre or load line LL is indicated as a midplane between the inboard and outboard horn rims of the wheel rim 14.

The steering knuckle 100 is preferably provided for a non-driven or a non-mechanically driven, i.e. individually driven, wheel 10 of a heavy commercial vehicle. A non-mechanically driven wheel may be a wheel with a wheel hub motor such as a hydraulic or an electrical wheel hub motor (not depicted in the drawing).

The steering knuckle 100 comprises a knuckle body 102 with a substantially vertical main portion 104 and two sides, wherein a support section 110 for a king pin 20 is arranged at one side of the main portion 104 of the knuckle body 102 and a stub axle 120 protruding from the main portion 104 of the knuckle body 102 on a side of the main portion 104 opposite of the side of the support section 110. The main portion 104 of the knuckle body 102 is particularly the portion including the biggest bearing.

The support section 110 comprises a receptacle for a king pin 20 wherein the receptacle has a first ear 112 and a second ear 114 spaced apart by a clearance 116. The ears 112, 114 are provided for holding the king pin 20. A link arm 30 engages the clearing 116 between the ears 112, 114, and the king pin 20 extends from one ear 112 through an ear of the link arm 30 through the other ear 114 of the support section 110 of the steering knuckle 100. The wheel 10 can be turned about a turning axle which is a centre axis 118 through the ears 112, 114 and the king pin 20. The stub axle 120 has a main extension L120 arranged transversal to the centre axis 118.

The knuckle body 102 may be manufactured by casting. Complex structures can be manufactured with high precision. However, other manufacturing methods may be employed, like forging or the like.

The stub axle 120 has an outer diameter d120 at the main portion 104 of the knuckle body 102. The outer diameter d120 is at least 60%, preferably at least 65%, more preferably at least 70% of the clearance 116. Preferably, said outer diameter d120 is the diameter of the stub axle 120 at the interface to the vertically oriented main portion 104 of the knuckle body 102, particularly at the vertical portion of the stub axle 120 adjacent to a transition zone of the stub axle 120 to the main portion 104. Such a transition zone is usually generated by a small smooth transition of the material of the stub axle 120 to the main portion 104 of the knuckle body 102. Expediently, the outer diameter d120 of the stub axle 120 can be about 68%, preferably about 73% or more of the clearance 116 between the ears 112, 114 located at the side of support section 110 of the knuckle body 102. By way of example, the stub axle 120 may have a diameter of at least 55 mm. The outer diameter d120 corresponds to the inner diameter of the wheel bearing 18 surrounding the stub axle 120.

Favourably, the steering knuckle 100 can bear a higher load which is not in a perfect position with respect to the stub axle 120. This means that by increasing the outer diameter d120, the interface between the stub axle 120 and the main portion 104 of the knuckle body 102 can be arranged nearer to the centre of the wheel 10. Advantageously, by increasing the outer diameter d120 of the stub axle 120 the stiffness of the knuckle body 104, particularly of the stub axle 120, increases even faster than the strength of the knuckle body 102, particularly of the stub axle 120. Typically, the stiffness grows with the 4^{th} power and the strength grows with the 3^{rd} power of the outer diameter d120.

Due to the improved stiffness and strength the stub axle 120 can have a central boring 122 extending along the main extension L120 of the stub axle 120 which favourably reduces the weight of the knuckle body 102 and provides space for support means for a wheel hub motor, if desired.

Increasing the outer diameter d120 of the stub axle 120 strengthens the knuckle body 102, resulting in an over-strong stub axle 120. Resulting from the improved bearing capacity for bearing load, the knuckle body 102 allows for integrating parts of a brake, particularly a disc brake 200, into the knuckle body 102. Integration of brake parts in the knuckle body 102 reduces the radial extension of the brake 200 and stub axle 120 from the wheel vertical turning axis (i.e. the centre axis 118 through the ears 112, 114) thus reducing the turning radius of the wheel 10 and accordingly of the vehicle. The vehicle becomes more agile and can be manoeuvred also in comparably narrow roads.

The steering knuckle 100 is advantageously designed for a disc brake 200 with a calliper 250. A brake disc 202 is arranged between two brake pads 228, 230. The brake disc 202 rotates about the stub axle 120 conform to the tyre of the wheel 10. A piston 232 for moving engaging the brake pad 230 is connected to a pneumatic brake cylinder 270 which activates the pistons in the usual way. The piston 232 is arranged in a piston housing 234.

A calliper 250 is arranged at an upper portion of the disc brake 200. The calliper 250 is the assembly which houses the brake pads 228, 230 and pistons (one piston 232 is seen in the Figure). There are two types of callipers 250: floating or fixed. A fixed calliper 250 does not move relative to the disc 202. It uses one or more pairs of opposing pistons to clamp from each side of the disc 202. A floating or sliding calliper 250 moves with respect to the disc 202, along a line parallel to the axis of rotation of the disc 202, wherein a piston on one side of the disc 202 pushes the inner brake pad 228, 230 until it makes contact with the braking surface, then pulls the calliper body with the outer brake pad 228, 230 so that pressure is applied to both sides of the disc 202.

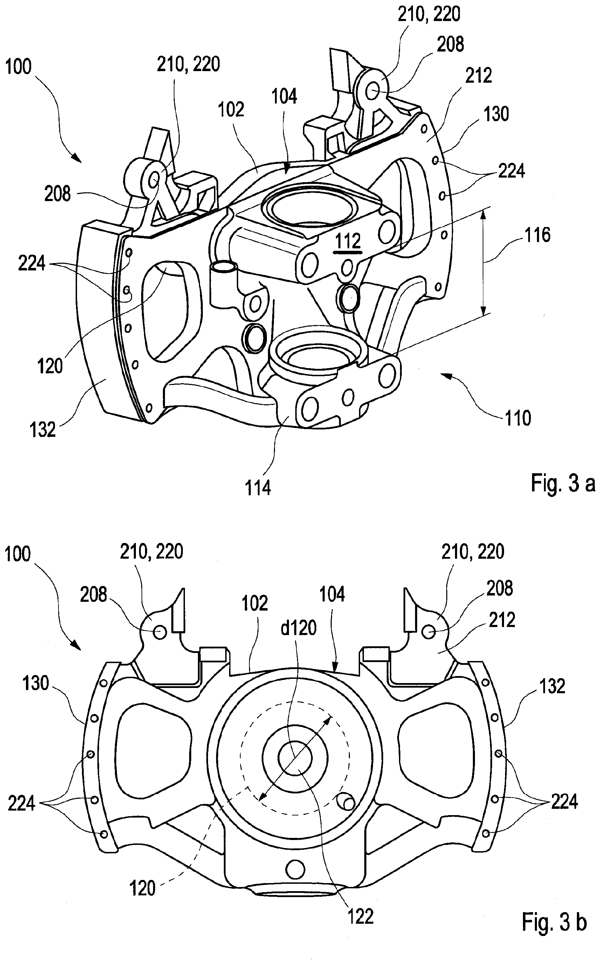

It is of advantage to integrate a part of a brake carrier 210 into the steering knuckle 100. For instance, the stay-like brake pad carrier 220 can be integrated into the knuckle body 102 as depicted in the example embodiment of Figs. 3a-3c. The brake pad carrier 220 locks the brake pads 228, 230 in rotational direction of the disc 202.

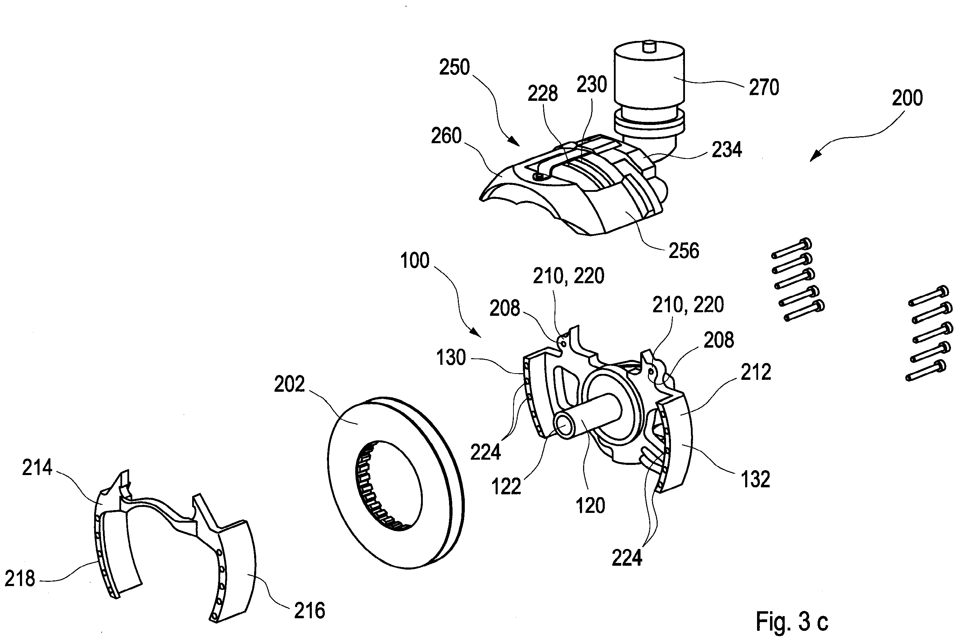

Figs. 3a - 3c relate to an embodiment of a steering knuckle 100 for a sliding calliper 250, wherein Fig. 3a shows a support section 110 with ears 112, 114 for receiving a king pin (not shown) of the steering knuckle 100 in a perspective view, Fig. 3b shows a front view from the stub axle side and Fig. 3c an exploded view of an assembly of a steering knuckle 100 and a first variant of a partly integrated disc brake 200, illustrating an inner part 212 of a brake pad carrier 220 integrated into the knuckle body of the steering knuckle 100.

At least a portion of a disc brake 200 is integrated into the knuckle body 102, wherein in this exemplary embodiment the portion of the disc brake 200 comprises the inner part 212 of the stays forming the brake pad carrier 220 in the upper part of the knuckle body 102.

Further, side parts 130, 132 extending sideways from the main portion 104 of the knuckle body 102 are part of the knuckle body 102. The main portion 104 of the knuckle body 102 has openings for reducing weight and allowing airflow into the disc brake 200. Each side part 130, 132 is formed as a collar with borings 224 parallel to the stub axle 120 arranged at the main portion 104, thus providing a recess or trough for receiving the brake disc 202 (Fig. 3c) and the brake pads 228, 230 when the steering knuckle 100 and the brake are assembled. The pneumatic cylinder 270, the pistons in the piston housing 234, the calliper 250, the brake pads 228, 230 and a front upper part 260 are assembled in one mounting unit which can be screwed to the steering knuckle 100.

As can be seen in Fig. 3c, the brake disc 202 can be arranged in the recess formed by the side parts 130, 132 and the main portion 104 of the knuckle body 102. An outer part 214 of the brake carrier 210 can be screwed to the inner part 212 with screws through the borings in the side parts 130, 132. The calliper 250 can be mounted on the stay-like brake pad carrier 220 (pointing upwards in Figs. 3a-3c) of the inner part 212 and the outer part 214 forming the brake pad carrier 220. Particularly, the piston housing 234 can be screwed to the steering knuckle 100.

The stay-like brake pad carrier 220 has borings 208 which can cooperate with guiding sleeves for the sliding calliper.

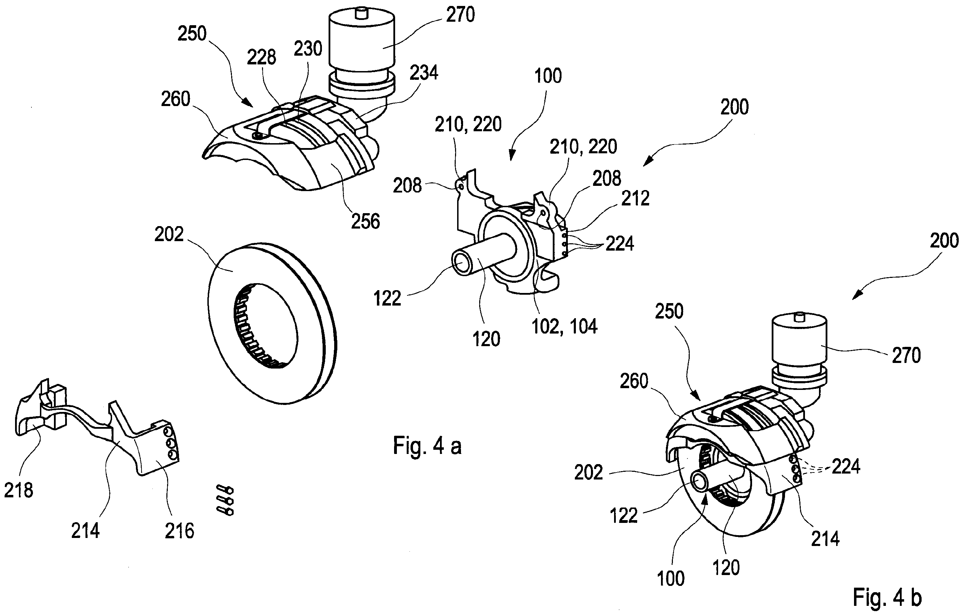

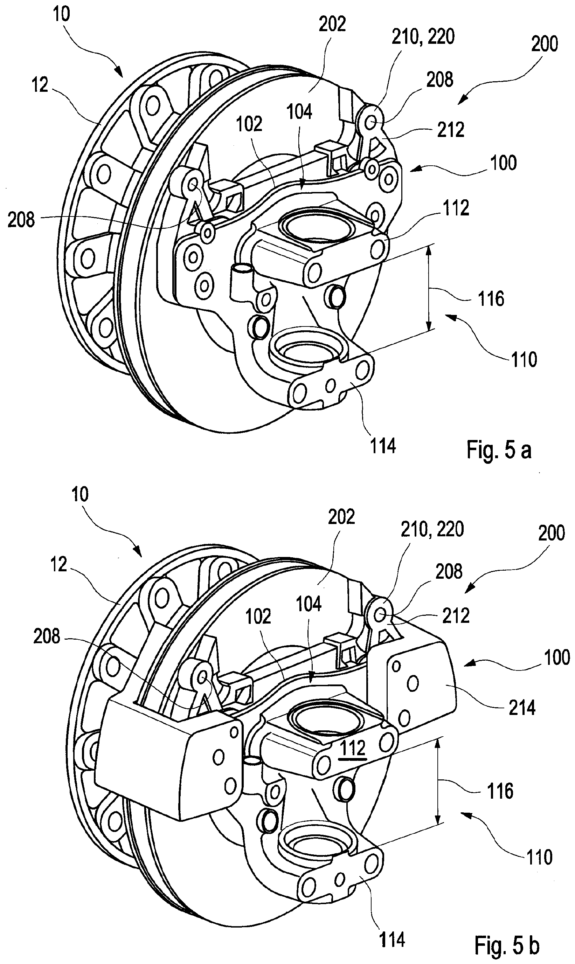

Figs 4a and 4b and 5a-5d relate also to an embodiment of a steering knuckle 100 for a sliding calliper 250, wherein Fig. 4a shows an explosion view of the components and Fig. 4b the assembled components, Figs. 5a-5d shows a rear view from a support section 110 of a partly assembled wheel 10 with a wheel hub 12 and a steering knuckle 100 and the assembly the disc brake 200.

In accordance with the invention, an inner part 212 of the brake-pad carrier 220 is integrated in the knuckle body 102, providing borings 224 arranged radially with respect to the stub axle 120. An outer part 214 of the brake carrier 210 has side parts 216, 218 extending parallel to the stub axle 120 by way of which the outer part 214 can be screwed to the inner part 212 to the brake carrier 210. The brake disc 202 can be arranged in the space between the inner and outer parts 212, 214. The mounting unit comprising a pneumatic cylinder 270, pistons in the piston housing 234, a calliper 250, brake pads 228, 230 and a front upper part 260 can be screwed to the steering knuckle 100.

The stay-like integrated inner part 212 of the brake pad carrier 220 has borings 208 which can cooperate with guiding sleeves for the sliding calliper.

As can be seen in Figs. 5a-5d a possible assembly of the disc brake 200 and the steering knuckle 100 (in a variant as shown in Figs. 4a and 4b) with an integrated brake carrier 210 includes mounting the brake disc 202 on the stub axle (not to be seen in the Figure) of the steering knuckle 100 which has a stay-like inner part 212 of the brake pad carrier 220 with two stays pointing upward integrated to the knuckle body 102. The pads of the brake pad carrier 220 are not shown for clarity.

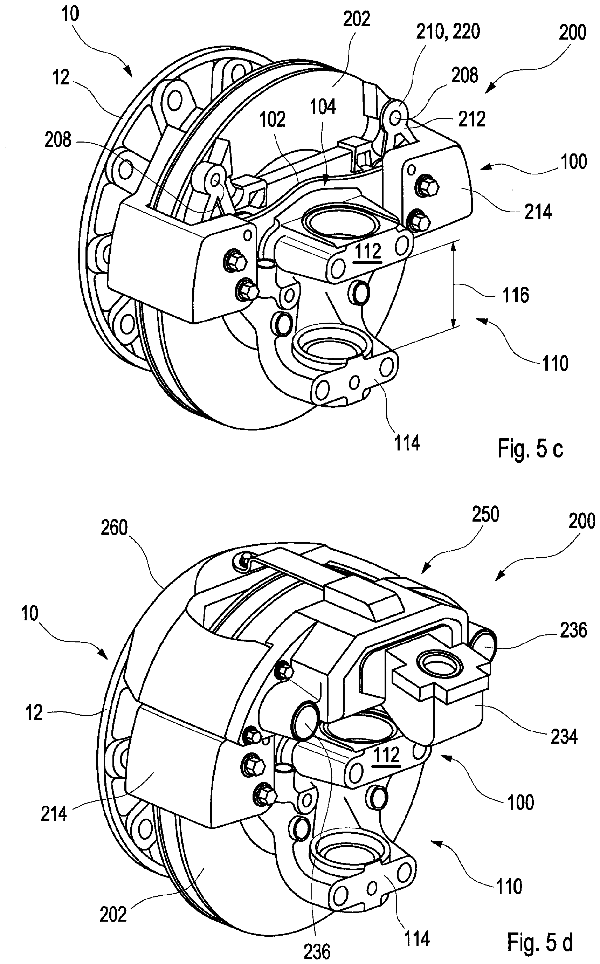

An outer part 214 of the brake pad carrier 220 is mounted (Fig. 5b) and screwed to the rear side of the knuckle body 102 (Fig. 5c). The unit comprising the calliper 250 and the piston housing 234 and the yoke-like front part 260 is mounted from above and screwed to the knuckle body 102 (Fig. 5d). The unit provides guiding sleeves 236 which cooperate with the borings 208 in the stay-like brake pad carrier 220.

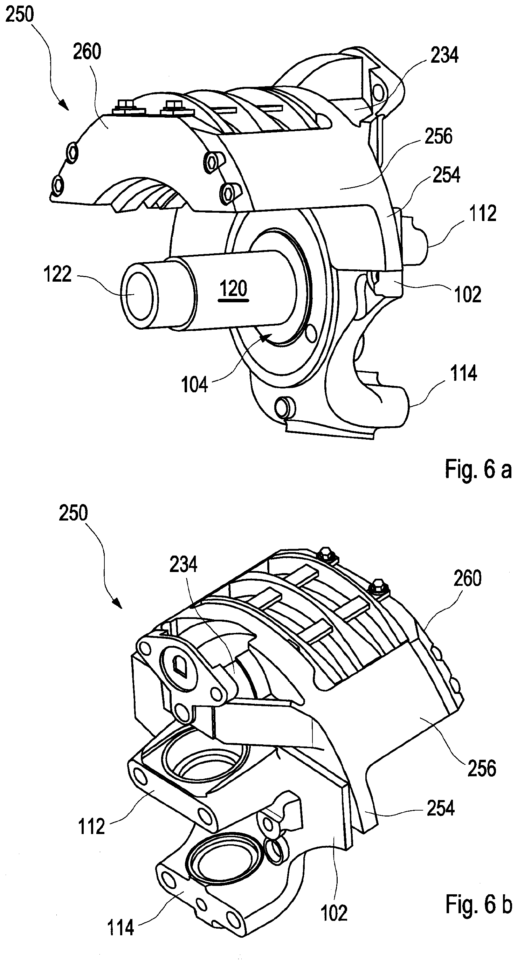

Figs. 6a and 6b depict an example embodiment for a wheel 10 with a fixed calliper 250 whereby a portion of a calliper 250 is integrated in the knuckle body 102. Fig. 6a shows a steering knuckle 100 assembled with a fixed calliper 250 partially integrated into the knuckle body 102 as a perspective view on a side with a stub axle side 120 and a perspective view on a support section 110 of the steering knuckle 100 in Fig. 6b.

By way of example the integrated portion of the calliper 250 is a bridge 254 of the calliper 250 as well as an inner brake-pad retainer 256. The bridge 254 provides borings 256 for screwing a piston housing 234 to the bridge 254. A yoke-like front part 260 is screwed to the integrated portion of the calliper 250. Alternatively, the brake-pad retainer 256 can be a separate element and screwed to the bridge 254 as well.

The brake carrier 210 may comprises one or more borings provided for one or more guiding sleeves a sliding brake disc (not shown).

The disc brake 200 can be much stiffer and give the possibility to be more flexible regarding the attachment of the brake pads which will give the potential to have longer pad life, durability and also a better resistance to disc cracks. More space is available by integrating a part of the brake carrier or the calliper in the knuckle body 102 due to the fact that no screws are needed to mount these parts.

The brake pads and brake disc can be mounted in one unit which makes it possible to close the calliper 250 so that exposure to dirt is reduced.

Additionally, a stiffer disc brake will give the possibility to design the yoke-like front part 260 in a different way to easily be fitted in to smaller rims of the wheel. The wheel is more compact and thus gives advantages in terms of a smaller turning radius of the wheel and as a result of the vehicle.

## Claims

1. A steering knuckle (100) for a non driven or individually driven wheel (10) of a heavy commercial vehicle, comprising
- a knuckle body (102),
- at least one support section (110) for a king pin (20) at one side of a main portion (104) of the knuckle body (102), the support section (110) comprising two ears (112, 114) spaced apart by a clearance (116), the ears (112, 114) being provided for holding the king pin (20),
- a stub axle (120) protruding from the main portion (104) of the knuckle body (102) on a side of the main portion (104) opposite of the support section (110) and having a main extension (L 120) arranged transversal to a centre axis (118) through the ears (112, 114), wherein
- the stub axle (120) has an outer diameter (d120) at the main portion (104) of the knuckle body (102) which is least 60%, preferably 65%, more preferably 70% the clearance (116), wherein at least a portion of a disc brake (200) is integrated into the knuckle body (102), wherein the portion of the disc brake (200) comprises an inner part (212) of a brake carrier (210), wherein an inner part (212) of a brake-pad carrier (220) is integrated in the knuckle body (102), providing borings (224) arranged radially with respect to the stub axle( 120), **characterized in that** an outer part (214) of the brake carrier (210) has side parts (216), (218) extending parallel to the stub axle (120) by way of which the outer part (214) is screwed to the inner part (212) of the brake carrier (210), and wherein the brake disc (202) is arranged between the inner and outer parts (212,214) of the brake carrier (210).

2. The steering knuckle according to claim 1 comprising an attachment point designed for a disc brake calliper of a disc brake (200).

3. The steering knuckle according to claim 1 or 2, wherein the knuckle body (102) is manufactured by casting.

4. The steering knuckle according to any one of the preceding claims, wherein the stub axle (120) comprises at least one boring (122) extending along the main extension (L 120) of the stub axle (120).

5. The steering knuckle according to any one of the preceding claims, wherein the stub axle (120) has a diameter of at least 55 mm.

6. A vehicle comprising a knuckle (100) according to any one of the preceding claims.

## Patentansprüche

1. Lenkachsschenkel (100) für ein nicht angetriebenes oder individuell angetriebenes Rad (10) eines Schwernutzfahrzeugs, umfassend
- einen Achsschenkelkörper (102),
- wenigstens einen Trägerabschnitt (110) für einen Achsschenkelbolzen (20) an einer Seite eines Hauptabschnitts (104) des Achsschenkelkörpers (102), wobei der Trägerabschnitt (110) zwei Ösen (112, 114) umfasst, die durch einen Freiraum (116) beabstandet sind, wobei die Ösen (112,114) zum Halten des Achsschenkelbolzens (20) vorgesehen sind,
- eine Stummelachse (120), die von dem Hauptabschnitt (104) des Achsschenkelkörpers (102) an einer dem Trägerabschnitt (110) gegenüberliegenden Seite des Hauptabschnitts (104) vorsteht und eine Haupterstreckung (L 120) aufweist, die quer zu einer zentralen Achse (118) durch die Ösen (112, 114) angeordnet ist, wobei
- die Stummelachse (120) einen Außendurchmesser (d120) an dem Hauptabschnitt (104) des Achsschenkelkörpers (102) aufweist, der wenigstens 60 %, vorzugsweise 65 %, noch bevorzugter 70 % des Freiraums (116) beträgt, wobei wenigstens ein Abschnitt einer Scheibenbremse (200) in den Achsschenkelkörper (102) integriert ist, wobei der Abschnitt der Scheibenbremse (200) ein Innenteil (212) eines Bremsträgers (210) umfasst, wobei ein Innenteil (212) eines Bremsbelagträgers (220) in den Achsschenkelkörper (102) integriert ist, wobei Bohrungen (224) bereitgestellt sind, die hinsichtlich der Stummelachse (120) radial angeordnet sind, **dadurch gekennzeichnet, dass** ein Außenteil (214) des Bremsträgers (210) Seitenteile (216, 218) aufweist, die sich parallel zu der Stummelachse (120) erstrecken und mittels derer das Außenteil (214) an das Innenteil (212) des Bremsträgers (210) geschraubt ist, und wobei die Bremsscheibe (202) zwischen dem Innenteil und dem Außenteil (212, 214) des Bremsträgers (210) angeordnet ist.

2. Lenkachsschenkel nach Anspruch 1, umfassend einen Befestigungspunkt, der für einen Scheibenbremssattel einer Scheibenbremse (200) ausgelegt ist.

3. Lenkachsschenkel nach Anspruch 1 oder 2, wobei der Achsschenkelkörper (102) durch Gießen gefertigt ist.

4. Lenkachsschenkel nach einem der vorhergehenden Ansprüche, wobei die Stummelachse (120) wenigstens eine Bohrung (122) umfasst, die sich entlang der Haupterstreckung (L 120) der Stummelachse (120) erstreckt.

5. Lenkachsschenkel nach einem der vorhergehenden Ansprüche, wobei die Stummelachse (120) einen Durchmesser von wenigstens 55 mm aufweist.

6. Fahrzeug umfassend einen Lenkachsschenkel (100) nach einem der vorhergehenden Ansprüche.

## Revendications

1. Fusée de direction (100) pour une roue non entraînée ou entraînée individuellement (10) d'un véhicule utilitaire lourd, comprenant
- un corps de fusée (102),
- au moins une section de support (110) pour un pivot de fusée (20) au niveau d'un côté d'une partie principale (104) du corps de fusée (102), la section de support (110) comprenant deux oreilles (112, 114) espacées l'une de l'autre par un espacement (116), les oreilles (112, 114) étant prévues pour maintenir le pivot de fusée (20),
- un axe de fusée (120) faisant saillie à partir de la partie principale (104) du corps de fusée (102) sur un côté de la partie principale (104) opposé à la section de support (110) et ayant une extension principale (L 120) agencée transversalement à un axe central (118) à travers les oreilles (112, 114), dans laquelle
- l'axe de fusée (120) a un diamètre externe (d120) au niveau de la partie principale (104) du corps de fusée (102) qui est d'au moins 60 %, de préférence 65 %, plus préférablement 70 % de l'espacement (116), dans laquelle au moins une partie d'un frein à disque (200) est intégrée dans le corps de fusée (102), dans laquelle la partie du frein à disque (200) comprend une partie interne (212) d'un support de frein (210), dans laquelle une partie interne (212) d'un support de plaquette de frein (220) est intégrée dans le corps de fusée (102), fournissant des alésages (224) agencés radialement par rapport à l'axe de fusée (120), **caractérisée en ce qu'**une partie externe (214) du support de frein (210) possède des parties latérales (216), (218) s'étendant parallèlement à l'axe de fusée (120) au moyen desquelles la partie externe (214) est vissée sur la partie interne (212) du support de frein (210), et dans laquelle le disque de frein (202) est agencé entre les parties interne et externe (212, 214) du support de frein (210).

2. Fusée de direction selon la revendication 1, comprenant un point de fixation conçu pour un étrier de frein à disque d'un frein à disque (200).

3. Fusée de direction selon la revendication 1 ou 2, dans laquelle le corps de fusée (102) est fabriqué par moulage.

4. Fusée de direction selon l'une quelconque des revendications précédentes, dans laquelle l'axe de fusée (120) comprend au moins un alésage (122) s'étendant le long de l'extension principale (L 120) de l'axe de fusée (120).

5. Fusée de direction selon l'une quelconque des revendications précédentes, dans laquelle l'axe de fusée (120) a un diamètre d'au moins 55 mm.

6. Véhicule comprenant une fusée (100) selon l'une quelconque des revendications précédentes.
